**Europäisches Patentamt**

**European Patent Office**

**Office européen des brevets**

(11) Veröffentlichungsnummer : **0 028 811
B1**

(12) **EUROPÄISCHE PATENTSCHRIFT**

(45) Veröffentlichungstag der Patentschrift :
01.09.82

(21) Anmeldenummer : 80106837.0

(22) Anmeldetag : 06.11.80

(51) Int. Cl.³ : **C 01 B 33/02**

(54) Verfahren zum Reinigen von Rohsilicium.

(30) Priorität : 08.11.79 DE 2945072

(43) Veröffentlichungstag der Anmeldung :
20.05.81 (Patentblatt 81/20)

(45) Bekanntmachung des Hinweises auf die Patenterteilung : 01.09.82 Patentblatt 82/35

(84) Benannte Vertragsstaaten :
AT BE CH DE FR GB IT LI NL SE

(56) Entgegenhaltungen :
EP A 0 002 135
DE B 1 167 320

(73) Patentinhaber : HELIOTRONIC Forschungs- und
Entwicklungsgesellschaft für Solarzellen-Grundstoffe mbH
Johannes-Hess-Strasse 24
D-8263 Burghausen (DE)

(72) Erfinder : Dietl, Josef, Dr. Dipl.-Phys.
Am Bärenbach 17
D-8262 Neuötting (DE)
Erfinder : Holm, Claus, Dipl.-Chem.
Am Brunnen 1a
D-8011 Baldham (DE)
Erfinder : Sirtl, Erhard, Prof. Dr. Dipl.-Chem.
Kiefernweg 11
D-8261 Marktl/Inn (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Imprimerie Jouve, 18, rue St-Denis, 75001 Paris, France

## Verfahren zum Reinigen von Rohsilicium

Gegenstand der Erfindung ist ein Verfahren zum Reinigen von Rohsilicium durch Lösen in Aluminium und Behandeln mit einer Extraktionsschmelze.

Die Erfindung ist in erster Linie vor dem Hintergrund der Energiegewinnung mit Hilfe von Silicium-Solarzellen zu sehen. Um mit derartigen Solarzellen einen wirtschaftlich konkurrenzfähigen Beitrag zur Versorgung mit elektrischer Energie leisten zu können, ist es erforderlich, das Grundmaterial Silicium ausreichend billig zur Verfügung zu stellen. Dieses auf der Erde in Form von Siliciumdioxid in praktisch unerschöpflichen Mengen vorhandene Silicium muß aber zunächst reduziert und gereinigt werden. Die Reinigung der Rohsiliciums über die Gasphase, wie sie für die Herstellung von hochwertigen elektronischen Bauelementen üblich ist, scheidet aus, da sie um ein Vielfaches zu teuer ist. An die Reinheit von Solarzellen-Silicium werden jedoch keine so hohen Anforderung gestellt, so daß billigere Reinigungsverfahren herangezogen werden können.

In der Europäischen Patentanmeldung 2 135 wird ein Verfahren zur Reinigung von Rohsilicium beschrieben, nach welchem Silicium in eine Metallschmelze eingebracht, aus dieser kristallisiert, mit einer Extraktionsschmelze behandelt und anschließend durch Ziehen aus der Schmelze unter Ausnutzung der Segregation nachgereinigt wird. In dieser Patentanmeldung werden einleitend noch zahlreiche weitere Literaturstellen, die sich mit der billigen Reinigung von Silicium befassen, beschrieben.

Mit der Deutschen Offenlegungsschrift 27 29 464 wird schließlich ein Verfahren zum Reinigen von Silicium beschrieben, nach welchem vor dem an sich bekannten chemischen Reinigungsschritt das Silicium aufgeschmolzen und durch langsames Abkühlen wieder zum Erstarren gebracht wird, wobei die Siliciumschmelze ggf. noch mit einer Extraktionsschmelze in Kontakt gebracht werden kann.

Der Erfindung lag die Aufgabe zugrunde, ausgehend von dem zitierten Stand der Technik, ein mindestens gleich wirksames, aber einfacheres und billigeres Verfahren zum Reinigen von Rohsilicium anzugeben.

Gelöst wird diese Aufgabe dadurch, daß das zu reinigende Silicium mit Aluminium geschmolzen wird, diese Mischschmelze mit einer Aluminiumsulfidschmelze in Kontakt gebracht wird und nachfolgend das Silicium durch langsames Abkühlen der Mischschmelze bis minimal 600 °C auskristallisiert und abgetrennt wird.

Im erfindungsgemäßen Verfahren wird Rohsilicium (metallurgical grade silicon) mit einem Siliciumgehalt über 95 Gew.%, besser über 98 Gew.%, zweckmäßig gekörnt oder granuliert eingesetzt.

Das Rohsilicium wird entweder zusammen mit der Mindestmenge Aluminium, die zum Lösen bei der beabsichtigten Extraktionstemperatur erforderlich ist und die sich aus dem Phasendiagramm ergibt (vgl. Hansen, « Constitution of Binary Alloys », 2. Edition, McGraw Hill Book Company, Inc., New York 1958, Seite 133), aufgeschmolzen oder in bereits flüssiges Aluminium eingebracht. Letzteres ist insbesondere dann der Fall, wenn das Verfahren halb- oder voll-kontinuierlich durchgeführt wird und das nach Auskristallisieren von gereinigtem Silicium abgetrennte und noch Rohsilicium gelöst enthaltende flüssige Aluminium mit einer neuen Charge Rohsilicium versetzt dem Extraktionsbehältnis wieder zugeführt wird.

Mit Beginn des ersten Extraktionszyklus wird zweckmäßig Aluminiumsulfid als solches oder auch in Form von Aluminium und Schwefel in dem Extraktionstiegel aus beispielsweise Kohlenstoff vorgelegt und auf eine Temperatur oberhalb seines Schmelzpunktes von 1 100 °C aufgeheizt.

Bei Temperaturen oberhalb 1 100° C reagiert Silicium in merklichem Maße bereits mit der Sulfidschlacke zu flüchtigen Siliciumsulfiden, die aus dem System abdampfen und sich an kalten Stellen niederschlagen, weshalb es von Vorteil ist, durch geeignete Zuschläge den Schmelzpunkt der Aluminiumsulfidextraktionsschlacke so weit abzusenken, daß eine Extraktion der Aluminium-Silicium-Mischschmelze bei einer niedrigeren Temperatur von vorzugsweise etwa 1 000 bis 1 050 °C möglich wird.

Eine Schmelzpunktserniedrigung der Schlacke läßt sich beispielsweise durch geeignete sulfidische oder halogenidische Zusätze, insbesondere durch Fluoride und Sulfide der Alkali- und Erdalkalielemente erreichen. Als besonders günstig hat sich ein Zuschlag von Aluminiumoxid erwiesen, insbesondere in Mengen von etwa 20 bis 40 Gew.%, bezogen auf die hieraus resultierende Aluminiumsulfidextraktionsschmelze.

Die Menge Aluminium und die Chargenmenge Rohsilicium wird zweckmäßig so aufeinander abgestimmt, daß das Silicium zwar vollständig gelöst wird, aber die resultierende Aluminiumschmelze zumindest weitgehend mit Silicium bei der Extraktionstemperatur gesättigt ist, da ein Aluminiumüberschuß keinen Vorteil, sondern lediglich zusätzliche Kosten bedingt.

Bezüglich dem Gewichtsverhältnis Aluminium-Silicium-Mischschmelze und Aluminiumsulfidextraktionsschmelze während der Extraktion haben sich Werte zwischen 1 : 0,5 bis 1 : 1,5 als besonders günstig erwiesen, wenngleich auch mit anderen Gewichtsverhältnissen gearbeitet werden kann. Selbst bei einem Gewichtsverhältnis von 1 : 0,1 wird, nach allerdings längeren Extraktionszeiten, ein guter Reinigungseffekt erzielt, desgleichen bei Gewichtsverhältnissen mit einem höheren Anteil Aluminiumsulfidextraktionsschmelze als entsprechend dem angegebenen Verhältnis von 1 : 1, wobei in diesem Fall aber der Reinigungseffekt weder verbessert noch beschleunigt wird, da sich die Absitzzeiten nach dem Durchmischen verlängern. Auch in letztgenannten Fall würden sich natürlich die Kosten erhöhen, da größere Schmelzmengen auf Temperatur gehalten werden müßten.

Um die Extraktionszeiten zu verkürzen, empfiehlt es sich, die Kontaktflächen zwischen den beiden Schmelzen durch geeignete Durchmischung zu vergrößern. Dies erfolgt nach der bevorzugten Ausführungsform durch Rühren, wobei der Effekt gesteigert werden kann, wenn der Rührer absatzweise vertikal verschoben wird und alternierend seine Drehrichtung ändert. Geeignet sind beispielsweise Flügelrührer, die aufgrund ihrer Ausgestaltung eine der Schiffsschraube analoge Wirkungsweise zeigen und zweckmäßig vertikal verschiebbar sind. Als Materials für derartige Rührer eignet sich vor allem Kohlenstoff, insbesondere Graphit.

Nach dem Einbringen und Aufschmelzen von Rohsilicium enthaltendem Aluminium und der Aluminiumsulfidextraktionsschmelze wird zweckmäßig unter Schutzgas etwa 1 bis 3 Stunden gerührt, abhängig natürlich von der Intensität des Rührens, sowie den Dimensionen von Rührer und Extraktionsgefäß. Als Schutzgase eignen sich beispielsweise Stickstoff oder Argon. Der Rührphase schließt sich eine sogenannte Beruhigungsphase von durchschnittlich ebenfalls etwa 1 bis 3 Stunden an, während welcher des Rührer angehalten und ggf. aus der Schlacke nach oben ausgefahren wird und als Folge die Aluminiumtröpfchen mit dem gelösten Silicium aus der Extraktionsschmelze in den Metallsumpf absinken.

Anschließend werden beide Schmelzen getrennt und die Aluminium-Silicium-Mischschmelze langsam, zweckmäßig mit etwa 0,5 bis 3° pro Minute bis auf minimal etwa 600 °C (Temperatur des Eutektikums 577 °C), vorzugsweise etwa 650 bis 700 °C, abgesenkt.

Anschließend wird das Gemisch aus dem Tiegel, in welchem es abgekühlt wird, zur Abtrennung von den auskristallisierten Siliciumplättchen vorzugsweise in eine beheizbare Zentrifuge gegeben, in welcher das flüssige Aluminium abgeschleudert wird. Der Schleuderkorb sowie der Tiegel zum Auskristallisieren können aus Keramik oder Kohlenstoff bestehen, der Schleuderkorb auch aus Stahl. Eine andere Möglichkeit zum Auftrennen des Gemisches besteht darin, die auskristallisierten Siliciumplättchen mit beispielsweise Quarzwolle abzufiltrieren. Die nach dem einen oder anderen Verfahren abgetrennten Siliciumplättchen werden nach dem Abkühlen zum Entfernen des Restaluminiums beispielsweise mit verdünnter, wäßriger Salzsäure oder Alkohol gereinigt, wobei bei letztgenannter Methode bei Verwendung von Ethanol als Umsetzungsprodukt wohlfeiles Aluminiumethylat entsteht. Um auch noch eingeschlossenes Aluminium abzutrennen, empfiehlt es sich, die Siliciumplättchen auf etwa 50 μm zu mahlen und erneut mit verdünnter Salzsäure oder Alkohol auszulaugen, wodurch der Aluminiumgehalt auf etwa 400 bis 600 Gew.ppm abgesenkt werken kann, entsprechend etwa der maximalen Löslichkeit des Aluminiums in Silicium bei der Ausscheidungstemperatur. Ein derartiger Aluminiumpegel in Silicium läßt sich bei einigen polykristallinen Solarzellentypen bereits als Grunddotierung tolerieren, während andernfalls .der Aluminiumgehalt durch bekannte Methoden, wie beispielsweise Schlackenreinigung, durch gerichtete Erstarrung oder Ausdampfung im Vakuum, allein oder in Kombination, weiter reduziert werden kann. Wird beispielsweise die Schlackenreinigung angewandt, bei welcher das Silicium in eine Extraktionsschmelze, bestehend beispielsweise aus Erdalkalisilikaten und/oder Erdalkalifluoriden, eingebracht wird, so kann auf die vorherige Auslaugung mit Salzsäure oder Alkohol auch verzichtet werden.

Das abgetrennte Aluminium weist abhängig von der Temperatur, auf welche es zum Auskristallisieren des Siliciums abgekühlt wurde, noch einen Silicium-Restgehalt in der Größenordnung von 15 bis 20 Atom.% auf, der aber nicht verlorengeht, da es anschließend dem Extraktionstiegel zur Aufnahme einer neuen Charge Rohsilicium wieder zugeführt und deshalb zweckmäßig auf etwa 1 000 bis 1.050 °C aufgeheizt wird. Aus der Aufarbeitung entstehende Verluste an Aluminium werden von Zeit zu Zeit durch Zuschlag frischen Aluminiums ergänzt.

Die Verunreinigungen aus dem Rohsilicium werden durch die Extraktionsschmelze im wesentlichen in sulfidische Verbindungen umgewandelt, die in der Schlacke gelöst verbleiben oder aus dem System abdampfen. Hat sich die Extraktionsschmelze mit Verunreinigungen zu stark angereichert, so wird die Schlacke verworfen und durch frisches Aluminiumsulfid mit entsprechenden Aluminiumoxidzuschlägen ersetzt.

Beispiel

Als Extraktionstiegel wurde ein Kohletiegel mit Deckel verwendet, welcher mit einer Durchführung für einem Schraubenrührer aus Graphit versehen war.

In diesem Tiegel wurden 5 kg Rohsilicium (Reinheit 98 %, Körnung 2 bis 5 mm) und 5,5 kg Aluminium (Reinheit 99,9 %) vorgegeben und durch eine Widerstandsheizung, in welche der Tiegel gestellt war, unter Stickstoff aufgeschmolzen und auf ca. 1 050 °C aufgeheizt. Anschließend wurden 8 kg Aluminiumsulfidpulver (Reinheit 99,9 %) zusammen mit 2,5 kg Korundpulver (Reinheit 99,9 %) zugesetzt. Auch nach dem Aufschmelzen der Aluminiumsulfid-extraktionsschmelze wurde die Temperatur bei etwa 1 050 °C gehalten und etwa 2 Stunden mit einer Umdrehungszahl von ca. 100-200 U/Minute gerührt, wobei der schraubenförmige Rührer absatzweise vertikal verstellt und in Vor- und Rücklauf betrieben wurde.

Anschließend wurde der Rührer abgeschaltet und nach oben aus den Schmelzen abgezogen. Nach weiteren ca. 1,5 Stunden bei weitgehend konstanter Temperatur von .ca. 1 050 °C wurde die Aluminium-Silicium-Mischschmelze abgestochen und in einem weiteren Kohletiegel innerhalb 4 Stunden auf ca. 700 °C abgekühlt. Anschließend wurden die auskristallisierten Siliciumplättchen auf einem Filter aus gepreßter Quarzwolle abfiltriert und mit 20 Gew.%-iger wäßriger Salzäure gewaschen. Nach dem Abfiltrieren wurden die Siliciumplättchen in einer Kugelmühle aus Wolframcarbid auf eine durchschnittliche Teilchengröße von ca. 50 μm zerkleinert und erneut mit verdünnter wäßriger Salzäure gewaschen. Nach dem neuerlichen Abfiltrieren und Säurefreiwaschen resultierten ca. 3,9 kg Silicium nachstehender, mit einem Atomabsorptionsspektrometer bestimmter Analysenwerte : weniger als 600 Gew.ppm Aluminium, sowie Eisen, Calcium und Kupfer unterhalb der Nachweisgrenze. Kolorimetrisch wurde der Gehalt an Bor und Phosphor mit 2 Gew.ppm bzw. 0,2 Gew.ppm bestimmt.

Für einen zweiten Zyklus wurde das noch einen Gehalt von ca. 20 Atom% Silicium enthaltende schmelzflüssige Aluminium auf ca. 1 100 °C aufgeheizt und mit 4 kg Silicium obiger Spezifikation versetzt. Nach dem Lösen des Siliciums wurde die Schmelze mit der im Extraktionstiegel verbliebenen Aluminiumsulfidextraktionsschmelze wieder vereinigt und im übrigen analog dem ersten Reinigungszyklus verfahren. Es fielen annähernd 4 kg Silicium mit obigen Analysenwerten an.

**Ansprüche**

1. Verfahren zum Reinigen von Rohsilicium durch Schmelzen mit Aluminium und Behandeln mit einer Extraktionsschmelze, dadurch gekennzeichnet, daß die Aluminium Silicium Mischschmelze mit einer Aluminiumsulfidextraktionsschmelze in Kontakt gebracht wird und nachfolgend das Silicium durch langsames Abkühlen der Aluminium-Silicium-Mischschmelze bis minimal 600 °C auskristallisiert und abgetrennt wird.

2. Verfahren nach Anspruch 1, dadurch gekennzeichnet, daß die Extraktion der Aluminium-Silicium-Mischschmelze durch die Aluminiumsulfidextraktionsschmelze bei einer Temperatur von 1 000 bis 1 050 °C durchgeführt wird.

3. Verfahren nach Anspruch 1 und 2, dadurch gekennzeichnet, daß eine Aluminiumsulfidextraktionsschmelze mit einem Gehalt von 20 bis 40 Gew.% Aluminiumoxid eingesetzt wird.

4. Verfahren nach einem oder mehreren der Ansprüche 1 bis 3, dadurch gekennzeichnet, daß Aluminium-Silicium-Mischschmelze und Aluminiumsulfidextraktionsschmelze während der Extraktion im Gewichtsverhältnis 1 : 0,5 bis 1 : 1,5 vorliegen.

5. Verfahren nach einem oder mehreren der Ansprüche 1 bis 4, dadurch gekennzeichnet, daß der Kontakt der Aluminium-Silicium-Mischschmelze mit der Aluminiumsulfidextraktionsschmelze durch Ineinanderrühren der beiden Schmelzen gefördert wird.

6. Verfahren nach einem oder mehreren der Ansprüche 1 bis 5, dadurch gekennzeichnet, daß zum Auskristallisieren des Siliciums die Aluminium-Silicium-Mischschmelze mit einer Geschwindigkeit von 0,5 bis 3° pro Minute abgekühlt wird.

7. Verfahren nach Anspruch 6 und einem oder mehreren der Ansprüche 1 bis 5, dadurch gekennzeichnet, daß das Aluminium nach Abtrennen des auskristallisierten Siliciums wieder auf 1 000 bis 1 050 °C aufgeheizt und nach Einbringung einer weiteren Charge Rohsiliciums wieder mit der Aluminiumsulfidextraktionsschmelze in Kontakt gebracht wird.

**Claims**

1. A process for purifying crude silicon by melting it with aluminium and treating it with an extraction melt, characterized in that the aluminium-silicon mixed melt is brought into contact with an aluminium sulfide extraction melt and thereafter the silicon is crystallized out and separated off by slowly cooling the aluminium-silicon mixed melt to a minimum of 600 °C.

2. A process according to claim 1, characterized in that the extraction of the aluminium-silicon mixed melt by the aluminium sulfide extraction melt is carried out a temperature of from 1 000 to 1 050 °C.

3. A process according to claims 1 and 2, characterized in that an aluminium sulfide extraction melt having a content of 20 to 40 % by weight of aluminium oxide is used.

4. A process according to any one or more of claims 1 to 3, characterized in that the aluminium-silicon mixed melt and the aluminium sulfide extraction melt are present in a weight ratio of 1 : 0.5 to 1 : 1.5 during extraction.

5. A process according to any one or more of claims 1 to 4, characterized in that contact between the aluminium-silicon mixed melt and the aluminium sulfide extraction melt is promoted by stirring the two melts into each other.

6. A process according to any one or more of claims 1 to 5, characterized in that, for the purpose of crystallizing the silicon out, the aluminium-silicon mixed melt is cooled at a rate of from 0.5 to 3 degrees per minute.

7. A process according to claim 6 and any one or more of claims 1 to 5, characterized in that after separation of the silicon that has crystallized out, the aluminium is again heated to 1 000 to 1 050 °C and, after the introduction of a further charge of crude silicon, is again brought into contact with the aluminium sulfide extraction melt.

**Revendications**

1. Procédé pour purifier du silicium brut par fusion avec de l'aluminium et traitement par une masse fondue d'extraction, procédé caractérisé en ce qu'on met le mélange fondu aluminium/silicium en contact avec une masse fondue d'extraction au sulfure d'aluminium, puis on fait cristalliser le silicium en refroidissant lentement le mélange fondu aluminium/silicium jusqu'à une température minimale de 600 °C et on le sépare.

2. Procédé selon la revendication 1 caractérisé en ce que l'extraction du mélange fondu aluminium/silicium au moyen de la masse fondue d'extraction au sulfure d'aluminium est effectuée à une température de 1 000 à 1 050 °C.

3. Procédé selon l'une des revendications 1 et 2, caractérisé en ce qu'on utilise une masse fondue d'extraction au sulfure d'aluminium qui a une teneur en oxyde d'aluminium de 20 à 40 % en poids.

4. Procédé selon l'une quelconque des revendications 1 à 3, caractérisé en ce que le rapport pondéral du mélange fondu aluminium/silicium à la masse fondue d'extraction au sulfure d'aluminium, au cours de l'extraction, est compris entre 1 : 0,5 et 1 : 1,5.

5. Procédé selon l'une quelconque des revendications 1 à 4, caractérisé en ce qu'on favorise le contact entre le mélange fondu aluminium/silicium et la masse fondue d'extraction au sulfure d'aluminium en agitant l'une dans l'autre les deux masses fondues.

6. Procédé selon l'une quelconque des revendications 1 à 5, caractérisé en ce que, pour faire cristalliser le silicium, on refroidit le mélange fondu aluminium/silicium à une vitesse de 0,5 à 3° par minute.

7. Procédé selon la revendication 6 et selon l'une quelconque des revendications 1 à 5, caractérisé en ce qu'après avoir séparé le silicium qui a cristallisé on chauffe à nouveau l'aluminium à une température de 1 000 à 1 050 °C et, après y avoir introduit une autre charge de silicium brut, on le met à nouveau en contact avec la masse fondue d'extraction au sulfure d'aluminium.